# EUROPÄISCHE PATENTSCHRIFT

(11) **EP 1 039 196 B1**
(45) Veröffentlichungstag und Bekanntmachung des Hinweises auf die Patenterteilung: **01.02.2006**
(21) Anmeldenummer: 00201010.6
(22) Anmeldetag: 20.03.2000
(51) Int. Cl.: F16L 3/133, F16B 37/08

(54) **Rohrschelle mit einem weiblichen Befestigungselement und weibliches Befestigungselement**
Pipe clamp with a female fastening element and female fastening element
Collier de serrage à dispositif de fixation femelle et dispositif de fixation femelle

(30) Priorität: 19.03.1999 NL 1011608
(43) Veröffentlichungstag der Anmeldung: 27.09.2000
(73) Patentinhaber: J. van Walraven Holding B.V., 3641 RK Mijdrecht (NL)
(72) Erfinder: van Walraven, Jan, 3641 GP Mijdrecht (NL)
(74) Vertreter: Brookhuis, Hendrik Jan Arnold

(56) Entgegenhaltungen:
- WO-A-99/08007
- DE-A- 2 734 789
- FR-A- 912 009
- FR-A- 2 315 030
- US-A- 3 507 182
- US-A- 4 488 695
- US-A- 4 626 009

## Beschreibung

Die vorliegende Erfindung bezieht sich auf eine Rohrschelle nach dem Oberbegriff des Anspruchs 1, welche Rohrschelle mit einem weiblichen Befestigungselement, das auf ein männliches Befestigungselement gedrückt werden kann, versehen ist.

Eine derartige Rohrschelle ist aus der US 4.488.695 bekannt. Die bekannte Rohrschelle hat zwei Endteilen die von einem Innengewinde oder dergleichen versehen sind. Die Endteilen sind halbrund geformt und können um ein männliches Befestigungselement angeordnet werden. Während der Montage wird das männliche Befestigungselement zwischen den beiden Endteilen gebracht und anschliessend wird eine Buchse von oben über die zwei Endteilen geschoben damit diese im Angriff mit dem männlichen Befestigungsteil kommen und damit das männliche Befestigungselement zwischen den Endteilen gesichert wird,

Aus der WO 99/08039 ist eine Rohrschelle bekannt, wobei durch die Ausbildung des weiblichen Befestigungselements, das an dem ringförmigen metallenen Schellenkörper einer Rohrschelle befestigt ist, ein Monteur die Rohrschelle auf ein männliches Befestigungselement drücken kann. Durch den Eingriff des weiblichen Befestigungselements mit dem Gewinde oder dergleichen des männlichen Befestigungselements wird unmittelbar eine mechanisch belastbare Verbindung erhalten. Bei dieser bekannten Rohrschelle sind keine Sicherungsmittels vorgesehen.

Die Möglichkeit, eine derartige bekannte Rohrschelle auf ein männliches Befestigungselement zu drücken, vereinfacht die Tätigkeiten des Monteurs.

In der Praxis zeigt sich, daß die bekannte Rohrschelle nicht völlig zufriedenstellend ist.

Die erste Aufgabe der Erfindung ist es, eine verbesserte Rohrschelle nach dem Oberbegriff des Anspruchs 1 zu schaffen.

Die Erfindung schafft dazu eine Rohrschelle nach Anspruch 1.

Dadurch, daß zusätzliche Sicherungsmittel vorgesehen sind, kann eine stabile Verbindung zwischen dem männlichen und dem weiblichen Befestigungselement erhalten werden.

Vorzugsweise sind die zusätzlichen Sicherungsmittel dazu ausgelegt, ein eventuelles Spiel in dem Eingriff der beweglichen Segmente auf das Profil des männlichen Befestigungselements aufzuheben. Damit kan erreicht werden, daß der Monteur das Gefühl erhält, daß die Rohrschelle gut festsitzt, während bei der bekannten Rohrschelle der Eindruck besteht, daß ein geringes Maß an Spiel in der Verbindung mit dem männlichen Befestigungselement vorhanden ist.

Die Sicherungsmittel können andererseits in solcher Weise ausgeführt sein, daß durch die Sicherungsmittel ein Widerstand gegen eine unbeabsichtigte Verdrehung der Rohrschelle gegenüber dem männlichen Befestigungselement geschaffen wird. Dies ist vorteilhaft, weil es oft erwünscht ist, mehrere Rohrschellen in einer bestimmte Stellung anzuordnen, um anschließend ein Rohr in diese einzusetzen. Wenn sich die Rohrschellen leicht um das männliche Befestigungselement herum drehen können, ist die Chance groß, daß sich eine Rohrschelle aus ihrer richtigen Stellung dreht, bevor das Rohr in der Schelle liegt.

Die Sicherungsmittel können weiter so ausgeführt sein, daß eine zusätzliche Sicherung gegen das sichlösen oder Verschieben des männlichen Befestigungselements aus, bzw. gegenüber den beweglichen Segmenten des weiblichen Befestigungselements erhalten wird.

Selbstverständlich können die zusätzlichen Sicherungsmittel eine Kombination der obenbeschriebenen sichernden Wirkungen schaffen.

Vorzugsweise kommt das männliche Befestigungselement erst dann in Berührung mit dem verformbaren Sicherungskörper, nachdem das männliche Befestigungselement in Eingriff mit den beweglichen Segmenten des weiblichen Befestigungselements gekommen ist. Hierdurch kann zum Beispiel die Kraft, die erforderlich ist, um die Rohrschelle auf dem männlichen Befestigungselement auf zu drücken, beschränkt bleiben.

In einer bevorzugten Ausbildung ist der verformbare Sicherungskörper in solcher Weise aufgestellt und ausgebildet, daß durch eine Drehung der Rohrschelle gegenüber dem männlichen Befestigungselement, das (Gewinde-)Profil des männlichen Befestigungselements in den verformbaren Sicherungskörper schneidet.

In einer anderen Ausbildung ist der verformbare Sicherungskörper in solcher Weise aufgestellt und ausgeführt, daß das männliche Befestigungselement sich mit seiner Stirnfläche an den verformbaren Sicherungskörper anlegt, so daß durch eine Drehung der Rohrschelle gegenüber dem männlichen Befestigungselement dieser verformbare Sicherungskörper verformt wird und so eine sichernde Wirkung schafft.

Der verformbare Sicherungskörper kann einteilig ausgeführt sein mit einem oder mehreren federnden Elementen, die die federnde Wirkung der beweglichen Segmente des weiblichen Befestigungselements schaffen oder verstärken.

Zum Beispiel ist der verformbare Sicherungskörper aus Kunststoff oder Gummi, aber er könnte auch aus einem anderen Material, zum Beispiel einer weichen Metallsorte, oder aus Federstahl hergestellt sein.

Vorzugsweise wird die bezweckte sichernde Wirkung dadurch erhalten, daß die Rohrschelle, nachdem diese auf das männliche Befestigungselement gedrückt ist, zumindestens um eine halbe Umdrehung und maximal um drei Umdrehungen gedreht wird.

Aus der Stand der Technik ist aus WO 99/08007 ein weibliches Befestigungselement bekannt. Diese Ausbildung des weiblichen Befestigungselements ist in Kombination mit einer Rohrschelle auch aus WO 99/08039 bekannt.

Weiterhin ist aus der US 4.626.009 ein weibliches Befestigungselement bekannt zur Verriegelung eines Schiffscontainer. Das Befestigungselement umfasst ein konisches Haus, worin mehrere von einem Feder nach oben vorgespannen keilförmige Elemente angeordnet sind. Die keilförmige Elemente sind an einer Innenfläche mit Zähnen versehen, die auf das männliche Befestigungselement angreifen können. Wenn ein männliches Befestigungselement in dieses bekannte Befestigungselement hineingesteckt wird, dann werden die keilförmige Elemente gegen die Federkraft nach unten gedrückt und können nach aussen ausweichen, damit das männliche Befestigungselement zwischen die keilförmigen Elemente passieren kann.

Bei diesen zwei bekannten weiblichen Befestigungselementen sind keine Sicherungsmittel vorgesehen.

Die zweite Aufgabe der Erfindung ist es, ein weibliches Befestigungselement zu schaffen, das zum Beispiel nicht nur für eine obenbeschriebene Rohrschelle, sondern auch für andere Anwendungen geeignet ist.

Die erfindungsgemäße Rohrschelle, sowie das erfindungsgemäße weibliche Befestigungselement sind in den Ansprüchen und in der nachfolgenden Beschreibung anhand der Zeichnung beschrieben worden. Es zeigt:
- Fig. 1: eine perspektivische Ansicht einer bevorzugten Ausbildung des weiblichen erfindungsgemäßen Befestigungselements,
- Fig. 2: das Befestigungselement der Figur 1 in aufgelösten Einzelteilen,
- Fig. 3a-c: jeweils im Längsschnitt und in Seiten- und Unteransicht das Gehäuse des Befestigungselements der Figur 1,
- Fig. 4a-c: jeweils in Draufsicht, Seitenansicht und in abgewickelter Form das Innengewindeorgan des Befestigungselements der Figur 1,
- Fig. 5a-d: das zusätliche Organ des Befestigungselements der Figur 1 jeweils in einer Seitenansicht, Unteransicht, im Längsschnitt und Draufsicht,
- Fig. 6: eine erfindungsgemäße Rohrschelle, bei der das weibliche Befestigungselement der Figur 1 an dem metallenen Schellenkörper angeordnet ist,
- Fig. 7: in einer teilweise durchbrochenen perspektivischen Ansicht eine Variante des weiblichen Befestigungselements nach Figur 1,
- Fig. 8: eine perspektivische Ansicht des weiblichen Befestigungselements der Figur 7,
- Fig. 9a: in einer Seitenansicht schematisch eine Hälfte einer mit einem weiblichen erfindungsgemäßen Befestigungselement versehenen erfindungsgemäßen Rohrschelle,
- Fig. 9b: die Darstellung der Figur 9a, bei der das weibliche Befestigungselement im Querschnitt gezeigt ist,
- Fig. 9c: eine Ansicht der Rohrschellenhälfte der Figur 9a nach dem Pfeil B in Figur 9a,
- Fig. 9d: eine Draufsicht auf die Rohrschellenhälfte der Figur 9a,
- Fig. 10a-c: das erste bewegbare Segment des weiblichen Befestigungselements der Rohrschelle der Figuren 9a-c in einer Vorder-, Seiten- und Draufsicht, und
- Fig. 11a-c: das zweite bewegbare Segment des weiblichen Befestigungselements der Rohrschelle der Figuren 9a-c in einer Vorder-, Seiten- und Draufsicht.

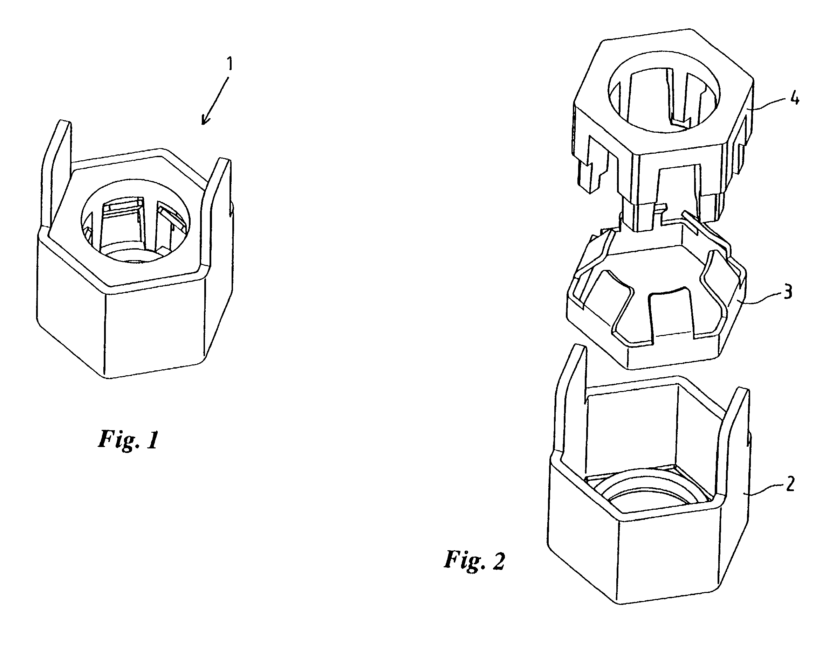

Die Figuren 1 und 2 zeigen jeweils im ganzen und in aufgelösten Einzelteilen ein Ausbildungsbeispiel des erfindungsgemäßen weiblichen Befestigungselements 1, das dazu ausgelegt ist, auf ein mit einem Außengewinde oder derartigem Profil versehenes männliches Befestigungselement gedrückt zu werden, so daß das weibliche und männliche Befestigungselement miteinander in Eingriff kommen, ohne daß eine Drehbewegung erforderlich ist. Das männliche Befestigungselement kann ein üblicher Schraubenbolzen, oder eine Gewindestange mit einem metrischen Gewinde sein, aber das erfindungsgemäße weibliche Befestigungselement ist auch dazu geeignet, auf männliche Befestigungselemente mit einer anderen Gewindeform oder einem Riffelprofil angewendet zu werden.

Das Befestigungselement 1 hat drei Teile: Ein Gehäuse 2, ein Innengewindeorgan 3 und ein zusätzliches Organ 4, die in Figur 2 deutlich gezeigt sind. Das Befestigungselement 1 ist in den Figuren in einer Ausschnittsvergrößerung gezeigt und kann zum Beispiel mit Abmessungen zum Aufnehmen eines männlichen Befestigungselements mit einem M8 oder M10 Gewinde hergestellt werden.

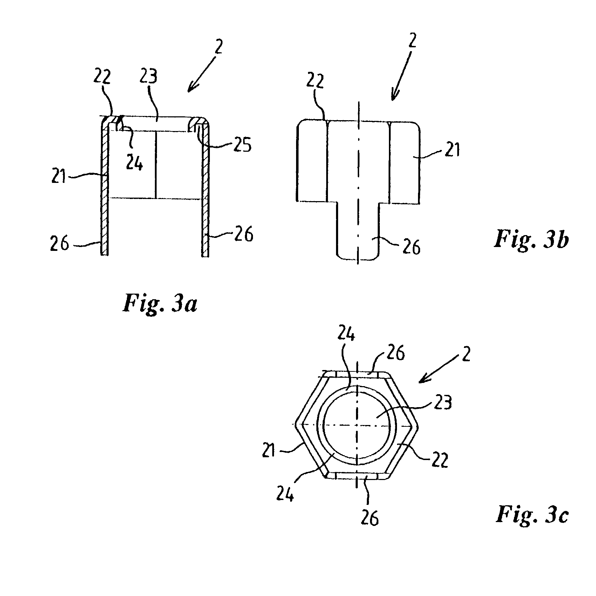

Das Gehäuse 2 ist im einzelnen in den Figuren 3a-c gezeigt und ist hier aus Metall, in einer vorteilhaften Ausbildung aus Blech mittels Bearbeitungen wie ein Stanzen und Tiefziehen hergestellt. In einer Variante kann das Gehäuse aus Kunststoff, zum Beispiel einem Faserverstärkten Kunststoff, hergestellt sein.

Das Gehäuse 2 hat hier eine sechskantige Umfangswand 21 und an einem axialen Ende eine Stirnwand 22, die mit einer Öffnung 23 versehen ist. Die Öffnung 23 wird von dem nach innen gebördelten Rand 24 der Stirnwand 22 begrenzt, so daß sich eine Nut 25 zwischen dem Rand 24 und der Umfangswand 21 bildet. Es wird deutlich sein, daß das Gehäuse 2 auch einen anderen, zum Beispiel viereckigen,
Querschnitt haben könnte.

Der zu der Umfangswand 21 hineinragende Teil der Stirnwand 22 bildet eine Schulter, an der das noch näher zu beschreibende Innengewindeorgan 3 anliegt.

An dem von der Stirnwand 22 abgewandten Ende der Umfangswand 21 ragen zwei diametral einander gegenüberliegende Befestigungslippen 26 heraus. Um das Befestigungselement 1 an einem Gegenstand, zum Beispiel einer Rohrschelle, anzuordnen, kann dieser Gegenstand mit zwei Löchern versehen werden, durch die die Lippen 26 hindurchgesteckt werden und die herausragenden Enden der Lippen 26 werden umgebogen und/oder verformt. Es wird deutlich sein, daß das Gehäuse 2 auch mit anderen Befestigungsorganen versehen sein kann, um das Gehäuse 2 an einem Gegenstand anzuordnen, oder daß diese Befestigungsorgane völlig entfallen können, wenn das Befestigungselement 1 als eine übliche Mutter angewendet wird.

Durch die sechskantige Form der Umfangswand 21 hat auch die Bohrung des Gehäuses 2 in dieser Ausbildung eine Sechskantform.

Das Innengewindeorgan 3 ist, wie ersichtlich in der Darstellung der Figur 1, in der Bohrung des Gehäuses 2 angeordnet und stützt dabei gegen die von der Stirnwand 22 gebildete Schulter des Gehäuses 2.

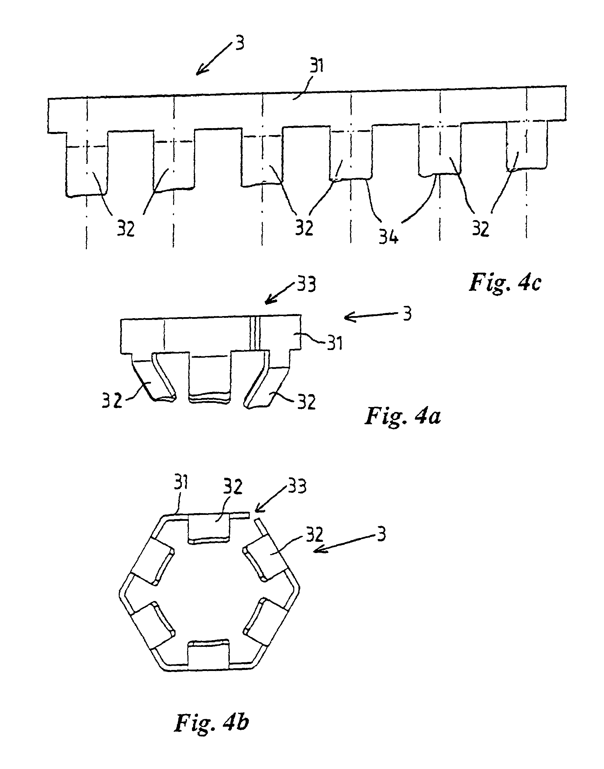

Das Innengewindeorgan 3, das im einzelnen in den Figuren 4a und 4b gezeigt ist, ist hier aus einem Metallstreifen, vorzugsweise Federmetall, hergestellt, der in flachem Zustand in Figur 4c gezeigt ist.

Das Innengewindeorgan 3 hat hier einen zu einem Sechskant gebogenen Ringkörper 31, bei dem mehrere herausragende Lippen 32 vorgesehen sind, die einteilig mit dem Ringkörper 31 sind. Die Lippen 32 sind zu dem Ringkörper 31 in solcher Weise schräg nach innen gerichtet, daß die Enden der Lippen 32 auf einem Kreisumfang liegen mit einem Durchmesser, der geringfügig kleiner als der Durchmesser des aufzunehmenden männlichen Befestigungselements ist.

Die Lippen 32 können, wenn das weibliche Befestigungselement 1 auf ein männliches Befestigungselement gedrückt wird, mit ihren Enden elastisch nach außen federn und mit ihren Enden ratschenartig über die Spitzen des Gewindeprofils des männlichen Befestigungselements gleiten. Der Eingriff zwischen dem weiblichen und dem männlichen Befestigungselement kann also ohne ein Drehen erhalten werden.

Der Ringkörper 31 paßt in der Bohrung des Gehäuses 2 und ist durch die komplementaire Form gegen eine Verdrehung gegenüber dem Gehäuse 2 gesichert. Weiter klemmt der Ringkörper 31 in dem Gehäuse 2 wegen des Vorhandenseins einer Längsteilnaht 33 und die federnde Qualität des Stahls, aus dem der Ringkörper 31 hergestellt ist.

In Figur 4c ist ersichtlich, daß die Länge der Lippen 32 nicht gleich ist, sondern von Lippe 32 zu Lippe 32 schrittweise um eine geringfügige Länge zunimmt. Hierdurch wird erreicht, daß die Enden der Lippen 32 nicht nur auf einem Kreisumfang, sondern auch auf einer Schraubenlinie, angepaßt an die Steigung des Außengewindes des aufzunehmenden männlichen Befestigungselements, liegen.

Das Innengewindeorgan 3 liegt mit seinem nicht mit Lippen 32 versehenen Rand an der Schulter 22 des Gehäuses 2 und steckt dabei in der Nut 25. Somit ragen die Lippen 32 an der von der Schulter 22 abgewandten Seite des Ringkörpers 31 heraus.

Um eine gute Anlage des Endes jeweils einer der Lippen 32 in dem Fußteil des Gewindeprofils des männlichen Befestigungselements zu erhalten, is vorgesehen, daß das Ende einer jeden Lippe 32 mit einer kreisförmigen Vertiefung 34 versehen ist. Hierbei liegt der Mittelpunkt dieses Kreisbogens einer jeden Vertiefung 34 in geringen Maße verschoben gegenüber der Mittellinie der betreffenden Seite des sechskantigen Ringkörpers in flachem Zustand. Gegebenenfalls kann das Endbereich jeder Lippe 32 weiter nach innen relativ zu der restlichen Lippe 32 umgebogen sein, um ein Anliegen des Endes der Lippe 32 an den Fuß des Gewindeprofils des männlichen Befestigungselements zu erreichen.
Das zusätzliche Organ 4 erfüllt in der gezeigten Ausbildung drei Funktionen, und zwar das Zentrieren des männlichen Befestigungselements relativ zu dem Innengewindeorgan 3, das Einschließen des Innengewindeorgans in der Bohrung des Gehäuses, und das Sichern des männlichen Befestigungselements. Als Alternative kann das zusätzliche Organ 4 in solcher Weise ausgeführt sein, daß es nur ein oder zwei der obengenannten Funktionen erfüllt. Die dazu geeigneten Ausbildungen werden für den Fachmann nach dem Lesen des Untenstehenden und der Ansprüche deutlich sein.

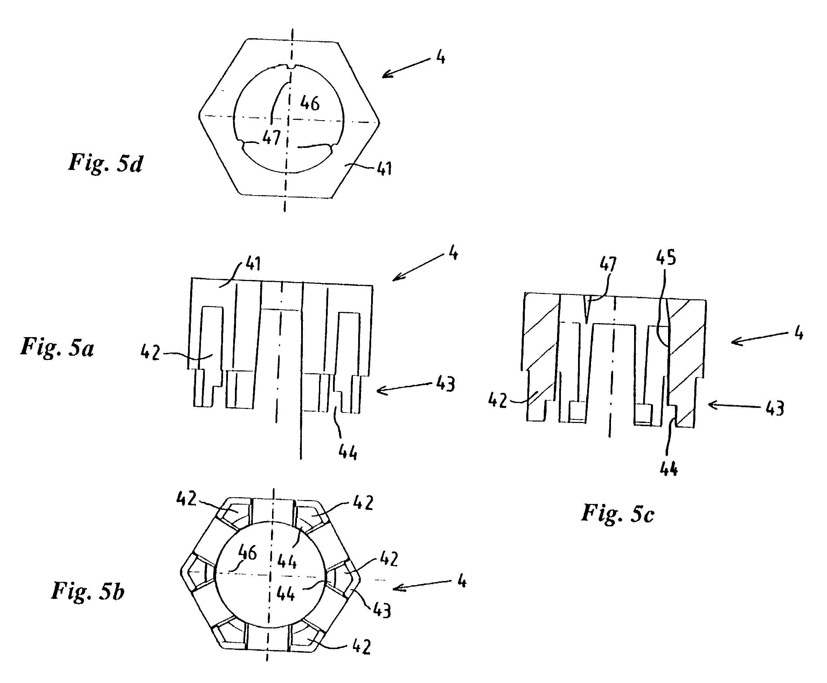

Das zusätzliche Organ 4 ist vorzugsweise aus einem gießbaren Material, insbesondere Kunststoff, vorzugsweise mittels eines Spritzgießens, hergestellt, und ist im einzelnen in den Figuren 2 und 5a-d gezeigt.

Das Organ 4 befindet sich hauptsächlich an der von der Schulter 22 abgewandten Seite des Innengewindeorgans 3 in dem Gehäuse 2.

Das Organ 4 hat ein Ringwandteil 41 mit einem Außenumfang, der in dem Gehäuse 2 paßt, vorzugsweise mit einem Klemmsitz. An das Ringwandteil 41 sind hier sechs Beine 42 angeformt, die eine solche Länge haben, daß das Ringwandteil 41 flächig mit dem freien Rand des Gehäuses 2 ist, und die Beine 42 sich bis an die Stirnfläche 22 des Gehäuses 2 erstrecken.

Die Beine 42 befinden sich jeweils an einer Ecke der Umfangswand des Gehäuses 2. Hierbei liegt jedes Bein 42 an den Wandteilen der Umfangswand 21 an, die in einer Ecke des Gehäuses 2 zusammenkommen.

In der Nähe des Endes ist jedes Bein 42 an seiner Außenseite mit einer Vertiefung 43 versehen, die relativ zu dem Außenumfang der Sechskantform des Organs 4 nach innen liegt. Diese Vertiefungen 43 sind derart, daß die Beine 42 über die Innenseite des Ringkörpers 31 des Innengewindeorgans 3 herausragen, wobei dann der Ringkörper 31 in den Vertiefungen 43 liegt. Somit ist der Ringkörper 31 zwischen den Beinen 42 und dem Gehäuse 2 eingeklemmt. Weiter sind die Beine 42 in der Nähe ihrer Enden auch an der Innenseite mit einer Vertiefung 44 versehen, so daß die Beine 42 mit ihren Enden in der Nut 25, zwischen dem Rand 24 und dem an der Umfangswand 21 anliegenden Ringkörper 31, ragen können. Hierdurch ist der Ringkörper 31 des Innengewindeorgans 3 fest eingeschlossen, was die Einschließfunktion des Organs 4 ist.

Der Querschnitt jeweils eines der Beine 42 ist derart, daß jedes Bein 42 zwischen zwei benachbarten Lippen 32 des Innengewindeorgans 3 ragt. Hierbei hat jedes Bein 42 eine Innenfläche 45, welche Innenfächen 45 an der Seite der Stirnwand 22 auf einem Kreisumfang liegen mit einem Durchmesser, der in geringem Maße größer als der Durchmesser des aufzunehmenden männlichen Befestigungselements ist. Auch die Öffnung 23 des Gehäuses 2 hat vorzugsweise einen Durchmesser, der nur in geringem Maße größer als der Durchmesser des männlichen Befestigungselements ist.

Dadurch, daß die Beine 42 zwischen den Lippen 32 stecken, begrenzen diese Beine 42 den Bewegungsraum für das aufzunehmende männliche Befestigungselement, insbesondere in eine Richtung, die quer zu der Einsteckrichtung dieses männlichen Befestigungselements ist. Diese Zentrierfunktion ist vorteilhaft, wenn ein zugehöriges männliches Befestigungselement in das Befestigungselement 1 hineingesteckt wird. Weiter wird vorgebeugt, daß eine oder mehrere der Lippen 32 zu weit radial nach außen gedrückt werden können und dadurch (teilweise) ihre federnde Wirkung verlieren. Durch das zusätzliche Organ 4 wird auch eine unerwünschte Kippmöglichkeit des Befestigungselements 1 zu dem in dieses eingesteckten männlichen Befestigungselement weitgehend reduziert.

Das Ringteil 41 ist mit einer kreisförmigen Öffnung 46 in der Verlängerung der Öffnung 23 des Gehäuses 2 versehen. Die Öffnung 46 hat hier einen einigermaßen geringeren Durchmesser als die Öffnung 23, welcher Durchmesser der Öffnung 46 hier noch ein wenig größer als der Außendurchmesser des aufzunehmenden männlichen Befestigungselements ist.

Die Innenflächen 45 der Beine 42 verlaufen in einem Winkel zu der Miitelachse durch die beiden Öffnungen 23 und 46 und schließen an die Begrenzungsränder dieser Öffnungen an.
In bezug auf die Sicherungsfunktion des zusätzlichen Organs 4 ist in den Figuren 5c und 5d ersichtlich, daß das Organ 4 mit drei ab dem Begrenzungsrand der Öffnung 46 hineinragenden Sicherungsnocken 47 versehen ist.

Die Sicherungsnocken 47 definieren an einer Stelle, die ab der Schulter 22 des Gehäuses 2 gesehen an den Lippen 32 vorbei liegt, einen verengten Teil, der einen geringeren Durchmesser als der Außengewindedurchmesser des aufzunehmenden männlichen Befestigungselements hat. Durch eine Drehung des männlichen Befestigungselements gegenüber dem weiblichen Befestigungselement 1 kann dann das Gewinde des männlichen Befestigungselements in die Sicherungsnocken 47 schneiden und so kann das männliche Befestigungselement in den verengten Teil des Organs 4 gelangen.

Beim Einführen eines männlichen Befestigungselements in das Befestigungselement 1 kommt das männliche Befestigungselement also zunächst in Eingriff mit den federnden Lippen 32, so daß bereits eine stark belastbare Verbindung erzielt ist. Anschließend stößt der Kopf des männlichen Befestigungselements gegen die Sicherungsnocken 47 und dadurch, daß er dann gedreht wird, schneidet das Gewinde des männlichen Befestigungselements in die Sicherungsnocken 47.

Durch die Sicherung wird ein etwaiges kleines Spiel in dem Eingriff der Lippen 32 auf das Gewindeprofil des männlichen Befestigungselements aufgehoben. Weiter wird durch diese Sicherungsnocken 47 ein Widerstand erhalten, der eine relative Verdrehung zwischen dem Befestigungselement 1 und dem männlichen Befestigungselement erschwert. Weiter wird ein Kippen des Befestigungselements 1 gegenüber dem männlichen Befestigungselement beschränkt.

Es wird deutlich sein, daß das Organ 4 auch ohne die Öffnung 46, oder mit einer viel kleineren Öffnung ausgeführt sein kann, so daß das Organ 4 das Gehäuse, das gegenüber der Öffnung 23 liegt, zum Hindurchstecken des männlichen Befestigungselements abschließt.

In einer Variante kann vorgesehen sein, daß das Gehäuse und das zusätzliche Organ 4 unter Formschluß miteinander verbunden sind, zum Beispiel dadurch, daß in der Umfangswand des Gehäuses 2 eine oder mehrere Eindrücke angeordnet sind, die in zugehörigen Vertiefungen in dem zusätzlichen Organ stecken und so das zusätzliche Organ festhalten. Auch könnten zum Beispiel die Lippen 26 ein wenig kürzer und aufeinander zu gebogen sein, um das zusätzliche Organ 4 festzuhalten, oder könnte ein Teil des freien Randes des Gehäuses gebördelt sein, um das zusätzliche Organ 4 festzuhalten. In dieser Ausbildung kann das Befestigungselement als eine Alternative für eine übliche Mutter verwendet werden.

Die Herstellung des Befestigungselements 1 wird vorzugsweise in solcher Weise ausgeführt, daß zuerst das Innengewindeorgan 3 auf die Beine 42 des zusätzlichen Organs 4 aufgesteckt wird, und daß diese Einheit dann in das Gehäuse 2 eingeführt wird.

Die Erfindung sieht auch eine Ausbildung vor, bei der in einem gemeinsamen Gehäuse zwei Innengewindeorgane in axiale Richtung hintereinander angeordnet sind, wobei die Lippen in die gleiche Richtung zeigen. Hierbei ist das Innengewindeorgan, das am nähesten an der Öffnung des Gehäuses liegt, für ein männliches Befestigungselement mit einem größeren Durchmesser als das hinter diesem liegende Innengewindeorgan vorgesehen, zum Beispiel für M10 und M8. Bei jedem Innengewindeorgan kann dann ein zusätzliches Organ, wie obenbeschrieben, vorgesehen sein, oder es kann die Rede von einem gemeinsamen zusäzlichen Organ sein.

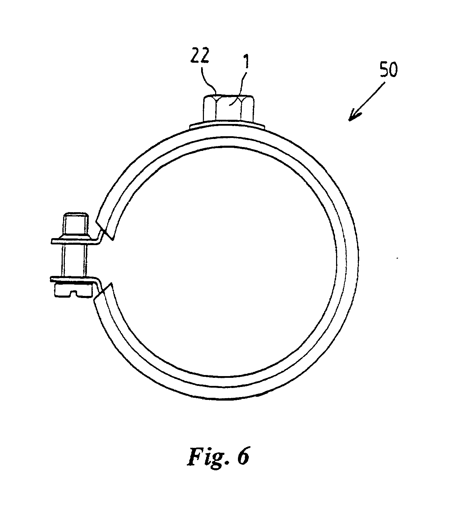

In einer anderen variante ist das erfindungsgemäße Befestigungselement als Verbinder zum Verbinden von zwei in gegenseitiger Verlängerung liegenden männlichen Befestigungselementen, zum Beispiel zwei Gewindestangen. In dieser Ausbildung ist ein Gehäuse vorgesehen mit an beiden axialen Enden eine Stecköffnung für ein männliches Befestigungselement, und an jedem Ende ein Innengewindeorgan, das das an diesem Ende eingeführte männliche Befestigungselement festhält.
Eine andere mögliche Anwendung des erfindungsgemäßen Befestigungselements ist in Figur 6 gezeigt.

In Figur 6 ist das weibliche Befestigungselement 1 mit der mit den Lippen 26 versehenen Seite an dem ringförmigen Schellenkörper einer Rohrschelle 50 befestigt. Hierbei schließt dieser Schellenkörper die Öffnung 46 ab, und kann ein männliches Befestigungselement, zum Beispiel eine Gewindestange, auf das die Schelle aufgehängt wird, dennoch schon in die Öffnung 46 hineingeführt werden, aber sie wird nicht durchstochen werden. Durch diese Ausbildung kann ein Monteur die Rohrschelle auf das bereits montierte männliche Befestigungselement drücken und durch den Eingriff der Lippen 32 auf das Gewinde des männlichen Befestigungselements wird unmittelbar eine kraftaufnehmende Verbindung erhalten. Durch dann die Rohrschelle 50 um eine oder mehrere Umdrehungen zu drehen, schneidet das männliche Befestigungselement mit seinem Gewinde in die Sicherungsnocken 47 und der Monteur kann so die Schelle 50 in den vom ihm gewünschten Stand bringen. Dies ist zum Beispiel wichtig, wenn mehrere Rohrschellen ausgerichtet werden, um in diesen anschließend eine Leitung anzuordnen. Dies bewirkt, daß Schellen nicht leicht um die Achse des zugehörigen männlichen Befestigungselements in einen nicht ausgerichteten Stand drehen können. Die Nocken 47 schaffen also eine Sicherung des Standes der Schelle 50. Auch wird erreicht, daß ein etwaiges Spiel zwischen dem weiblichen und dem männlichen Befestigungselement aufgehoben wird.

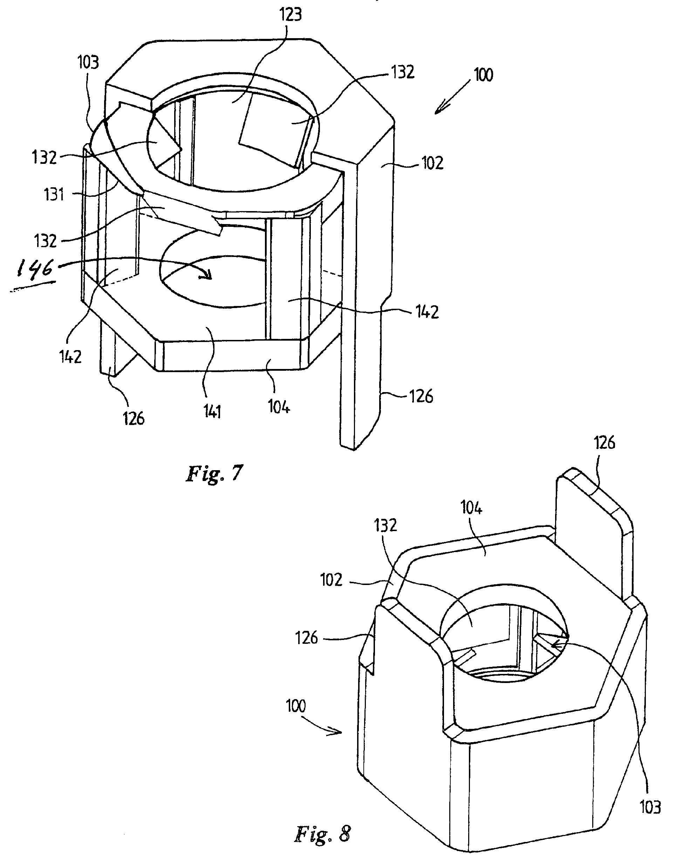

Die Figuren 7 und 8 zeigen jeweils teilweise und gänzlich ein Ausbildungsbeispiel des weiblichen erfindungsgemäßen Befestigungselements 100, das als eine Variante des weiblichen Befestigungselements, wie in Fig. 1 gezeigt, gesehen werden kann.

Das Befestigungselement 100 besteht aus drei Teilen: Ein Gehäuse 102, ein Innengewindeorgan 103 und ein zusätzliches Organ 104. Das Befestigungselement 100 ist in den Figuren in einer Ausschnittsvergrößerung gezeigt und kann zum Beispiel mit Abmessungen zum Aufnehmen eines männlichen Befestigungselements mit einem M8 oder M10 Gewinde hergestellt werden.

Das Gehäuse 102 ist hier aus Metall, in einer vorteilhaften Ausbildung aus Blech mittels Bearbeitungen wie ein Stanzen und Tiefziehen, hergestellt.

Das Gehäuse hat hier eine sechskantige Umfangswand und an einem axialen Ende eine Stirnwand, die mit einer Öffnung versehen ist. Der zu der Umfangswand hineinragende Teil der Stirnwand bildet eine Schulter, an der das noch näher zu beschreibende Innengewindeorgan 103 anliegt.

An dem von der Stirnwand abgewandten Ende der Umfangswand ragen zwei diametral einander gegenüberliegende Befestigungslippen 126 heraus.

Das Innengewindeorgan 103 ist in der Bohrung des Gehäuses 102 angeordnet und stützt dabei gegen die von der Stirnwand gebildete Schulter des Gehäuses 102.

Das Innengewindeorgan 103 ist hier aus Metall, vorzugsweise Federmetall, hergestellt.

Das Innengewindeorgan 103 hat hier einen Ringkörper 131, mit mehreren herausragenden Lippen 132, die einteilig mit dem Ringkörper sind. Die Lippen 132 sind zu dem Ringkorper 131 in solcher Weise schräg nach innen gerichtet, daß die Enden der Lippen auf einem Kreisumfang liegen mit einem Durchmesser, der geringfügig kleiner als der Durchmesser des aufzunehmenden männlichen Befestigungselements ist.

Die Lippen 132 können mit ihren Enden elastisch nach außen federn und ratschenartig über die Spitzen des Gewindeprofils des männlichen Befestigungselement gleiten. Der erste Eingriff zwischen dem weiblichen und dem männlichen Befestigungselement kann also ohne ein Drehen erhalten werden.

Der Ringkörper 131 paßt in dem Gehäuses 102 und ist durch die komplementaire Form gegen eine Verdrehung gegenüber dem Gehäuse 102 gesichert.
Das zusätzliche Organ 104 erfüllt in der gezeigten Ausbildung zwei Funktionen, und zwar das Einschließen des Innengewindeorgans 103 in dem Gehäuse, und das Sichern des männlichen Befestigungselements.

Das zusätzliche Organ 104 kann aus jedem geeigneten Material hergestellt werden. Zum Beispiel ist das Organ 104 aus einem gießbaren Material, insbesondere Kunststoff, hergestellt. Auch könnte das Organ 104 aus Metall, zum Beispiel einer geeigneten Stahlsorte, hergestellt sein.

Das Organ 104 befindet sich im wesentlichen an der von der Stirnwand abgewandten Seite des Innengewindeorgans 103 in dem Gehäuse 102.

Das Organ 104 hat ein Ringwandteil 141 mit einem Außenumfang, der vorzugsweise mit einem Klemmsitz in das Gehäuse 102 hineinpaßt. An das Ringwandteil 141 sind hier vier Beine 142 angeformt, die eine solche Länge haben, daß das Ringwandteil 141 flächig mit dem freien Rand des Gehäuses 102 ist und der Ringkörper 131 zwischen den Beinen 142 und der Stirnwand des Gehäuses 2 liegt. Die Beine 142 befinden sich jeweils an einer Ecke der Umfangswand des Gehäuses 102. Hierdurch ist der Ringkörper 131 fest eingeschlossen, was die Einschließfunktion des Organs 4 ist.

Der Querschnitt jeweils eines der Beine 142 ist derart, daß jedes Bein 142 zwischen zwei benachbarten Lippen 132 des Innengewindeorgans 103 steckt.

Das Ringteil 141 ist mit einer kreisförmigen Öffnung in der Verlängerung der Öffnung 123 des Gehäuses 102 versehen.

In bezug auf die Sicherungsfunktion des zusätzlichen Organs 104 ist in den Figuren 7 und 8 angenommen, daß die Öffnung 146 einen geringeren Durchmesser als der Außengewindedurchmesser des aufzunehmenden Befestigungselements hat. Durch eine Drehung des männlichen Befestigungselements gegenüber dem weiblichen Befestigungselement 100 kann dann das Gewinde des männlichen Befestigungselements in die Wand um die Öffnung 146 schneiden und so kann das männliche Befestigungselement in diesen verengten Teil des Organs 4 gelangen.
Als eine Alternative kann vorgesehen sein, daß das Organ 104 an der Öffnung 146 vorher mit einem Innengewinde, vorzugsweise mit nur einer geringen Anzahl Gewindegänge, eventuell nur einem einzigen Gang, versehen ist.

Diese alternative Ausbildung ist insbesondere vorteilhaft, wenn das Organ 104 aus Metall, vorzugsweise einer geeigneten Stahlsorte, hergestellt ist. Die Gewindeverbindung zwischen dem Organ 104 und dem mit nur einem einzigen oder einigen Gängen in dieses festgeschraubten männlichen Befestigungselement kann große Kräfte aufnehmen, wodurch eine größere Zuverlässigkeit der Verbindung erhalten wird.

Insbesondere kann vorgesehen sein, daß das weibliche Befestigungselement oder der Rohrschellenkörper, an dem es befestigt ist, einen Anschlag bildet, der die Einschraubtiefe des männlichen Befestigungselements einschränkt. Insbesondere liegt das Ringteil 141 an dem Rohrschellenkörper an und schließt mit diesem diesen Schellenkörper die Öffnung 146 ab, so daß der Rohrschellenkörper dann den bezweckten Anschlag für die Stirnseite des männlichen Befestigungselements bildet.

Beim Einführen eines männliches Befestigungselements in das Befestigungselement kommt das männliche Befestigungselement also zunächst in Eingriff mit den federnden Lippen 132, so daß bereits eine stark belastbare Verbindung erhalten ist. Anschließend gelangt der Kopf des männlichen Befestigungselements in die Öffnung 146, die wahlweise mit einem Gewinde versehen ist, und durch ein anschließendes Drehen wird sich die Stirnfläche des männlichen Befestigungselements an den Schellenkörper, oder einen anderswie ausgeführten Anschlag legen.

Durch diese Konstruktion wird einerseits ein Widerstand erhalten, der eine relative Verdrehung zwischen dem Befestigungselement 100 und dem männlichen Befestigungselement erschwert. Weiter wird ein Kippen des Befestigungselement gegenüber dem männlichen Befestigungselement beschränkt. Zugleich wird eine sehr zuverlässige Verbindung erhalten, die sich "fest" anfühlt und nicht klappert.

Das Organ 104 würde an der Stelle des Gehäuses der Öffnung 146, also der Öffnung 123 in der Stirnwand des Gehäuses gegenüber, auch mit einem verformbaren Körper versehen sein können, an den die Stirnfläche des männlichen Befestigungselements anstößt. Dadurch, daß die Rohrschelle um eine oder mehrere Umdrehungen gegenüber diesem männlichen Befestigungselement gedreht wird, würde dieser verformbare Körper zusammengedrückt werden und so die Sicherungsfunktion realisieren.

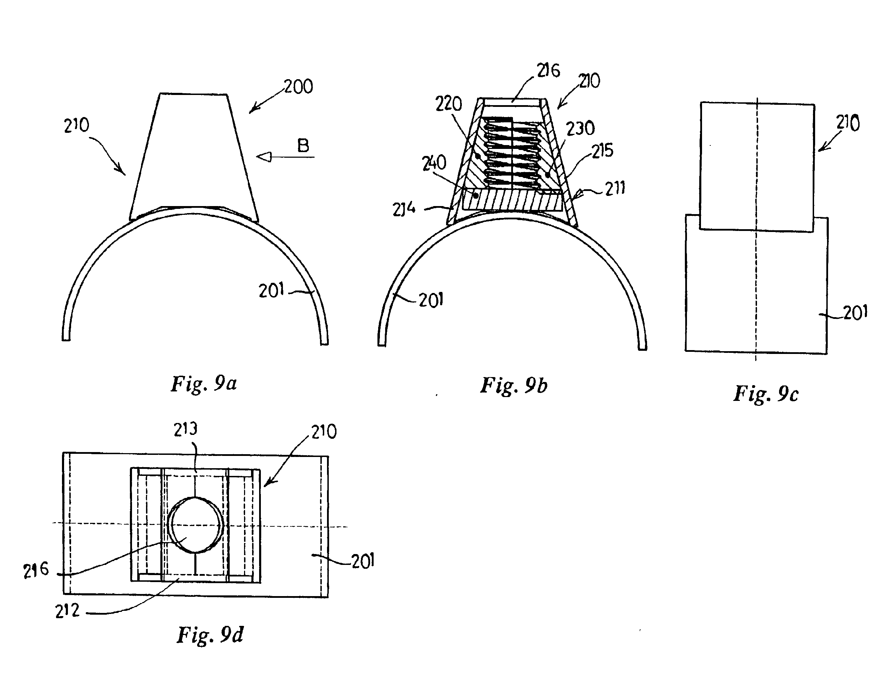

Anhand der Figuren 9a-d, 10a-c und 11a-c wird nachfolgend eine andere Ausbildung der erfindungsgemäßen Rohrschelle und das auf diese angewandte weibliche erfindungsgemäße Befestigungselement erläutert werden.

In den Figuren 9a-d ist eine Schellenhälfte 201 des ringförmigen metallenen Rohrschellenkörpers einer Rohrschelle 200 ersichtlich.

An der metallenen Rohrschellenhälfte 201 ist ein weibliches Befestigungselement 210 angeordnet. Das weibliche Befestigungselement 210 umfaßt ein Gehäuse 211 und zwei bewegbare Segmente 220 und 230, die in das Gehäuse 211 aufgenommen sind. Weiter umfaßt das weibliche Befestigungselement 210 ein kombiniertes Feder- und Sicherungsorgan 240.

Das Gehäuse 211 ist hier aus Metall hergestellt und zum Beispiel mittels eines Anschweißens an der Schellenhälfte 201 befestigt. Das Gehäuse hat vier Wände, dessen Wände 212, 213 parallel sind. Die Wände 214, 215 sind schräg aufgestellt und bilden an der von der Schellenhälfte 201 abgewandten Seite des Gehäuses 211 eine Stecköffnung 216 für ein männliches Befestigungselement, mit dem die Rohrschelle 200 an einer Unterstützung befestigt werden kann.

Die Segmente 220, 230 sind hier aus Metall hergestellt. An einer Seite ist jedes Segment 220, 230 mit einer halbzylindrischen Aussparung 221,231 versehen, die mit einem dem Außengewindeprofil des aufzunehmenden männlichen Befestigungselements entsprechenden Innengewindeprofil versehen ist. An der gegenüberliegenden Seite ist jedes Segment 220, 230 mit einer Gleitfläche 222, 232 versehen, die in einem Winkel zu der Achse der Innengewindeprofilaussparung verläuft. Die Gleitflächen 222, 232 sind so, daß die Segmente 220, 230 mit diesen Gleitflächen 222, 232 an den Seitenwänden 214, 215 des Gehäuses 211 anliegen, wobei dann die Aussparungen 221, 231 zusammen mehr oder weniger eine zylindrische Stecköffnung mit einem Innengewinde für das männliche Befestigungselement bilden können.

Die Segmente 220, 230 haben weiter parallele Seitenflächen 224,225 und 234,235, mit denen die Segmente mit geringem Spiel zwischen die Seitenwände 212,213 des Gehäuses passen.

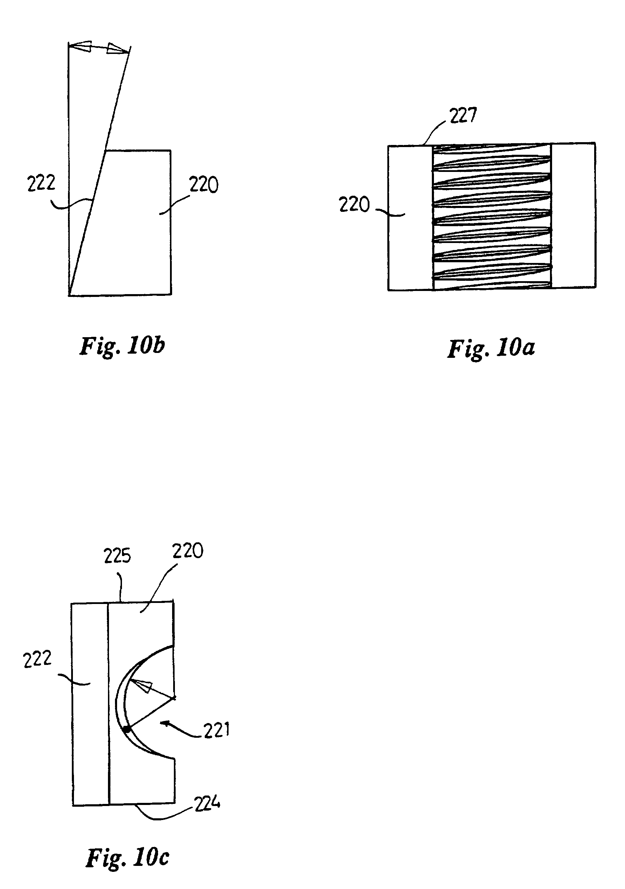

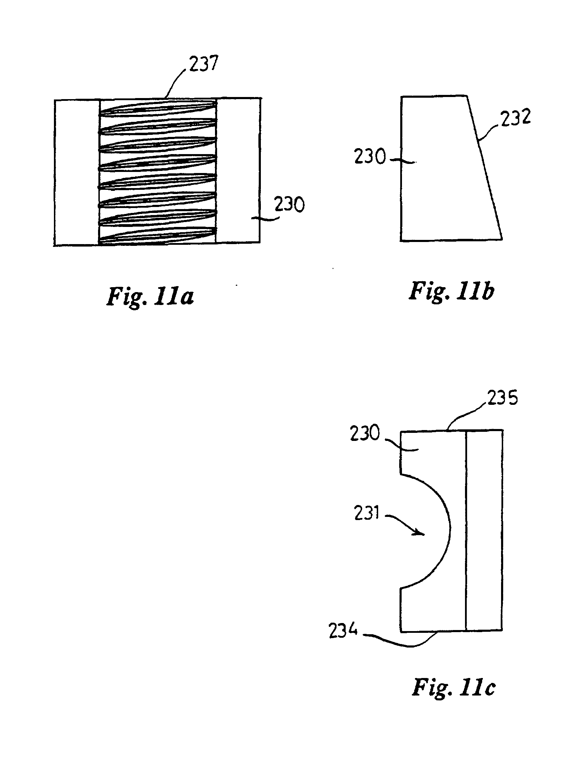

In den Figuren 10a und 11a ist ersichtlich, daß an der Seite, an der das männliche Befestigungselement zuerst mit den Segmenten 220, 230 in Berührung kommt, das Innengewindeprofil des einen Segments 220 bis in die Stirnfläche 227 des Segments 220 weiterläuft. Bei dem anderen Segment 230 läuft kein Gewindegang des Innengewindeprofils bis in die Stirnfläche 237 weiter.

Das kombinierte Feder- und Sicherungsorgan 240 wird in diesem Beispiel von einem relativ leicht verformbaren, insbesondere zusammendrückbaren, Material, wie Gummi oder Kunststoff gebildet. Das Organ 240 befindet sich zwischen den Segmenten 220, 230 einerseits und der Schellenhälfte 201 andererseits und schafft damit eine elastische Rückstellwirkung für die Segmente 220, 230. Weiter liegt das Organ 240 in der Verlängerung einer Öffnung mit einem Innengewinde, das von den Segmenten 220, 230 gebildet wird.

Bei der montage der Rohrschelle 200 drückt der Monteur das weibliche Befestigungselement 210 auf ein geeignetes männliches Befestigungselement mit einem Außengewinde. Hierdurch stößt dieses männliche Befestigungselement an die Segmente 220, 230 an, die sich dadurch einigermaßen in Richtung auf den Schellenkörper verlagern werden, um so ausreichend Raum für das Passieren des männlichen Befestigungselements zu schaffen. In Figur 9b ist suggeriert, daß das Segment 230 bereits ein wenig auf diese Weise verlagert ist. Anschließend stößt die Stirnfläche des männlichen Befestigungselements an das Organ 240, so daß ein weiter auf das männliche Befestigungselement Drücken der Rohrschelle nicht möglich ist. Die Segmente 220, 230 greifen dann bereits mit ihrem Innengewindeprofil auf das Außengewindeprofil des männlichen Befestigungselements an.

Die jetzt erhaltene Befestigung kann bereits erhebliche mechanische Belastungen aufnehmen, aber es erscheint dem Monteur, daß dennoch keine starke Verbindung dargestellt ist. So kann von einem gewissen Spiel, das als ein Klappern wahrgenommen wird, die Rede sein. Weiter kann sich die Rohrschelle sehr leicht um das männliche Befestigungselement herumdrehen und auch das ist nicht erwünscht.

Der Monteur kann nun aber die Rohrschelle 200 um ein Stück drehen, zum Beispiel eine einzige Umdrehung oder etwas mehr oder weniger, abhängig von der gewünschten Stellung des Schellenkörpers. Dabei wird sich die Stirnfläche des männlichen Befestigungselements 200 an das Organ 240 drücken werden, das dann nach Art eines zusammendrückbaren Kissens wirkt. Dadurch, daß das Organ 240 nicht steif wie der unterliegende Metallschellenkörper ist, sondern leichter verformbar, wird bei einer Drehung der Rohrschelle 200 dieses Organ 240 örtlich von dem Kopf des männlichen Befestigungselements eingedrückt werden. Dies bewirkt, daß das eventuelle Spiel zwischen den Segmenten 220, 230 und dem männlichen Befestigungselement aufgehoben wird. Weiter erzeugt das Organ 240 einen Widerstand gegen eine unbeabsichtige Rotation der Rohrschelle um das männliche Befestigungselement.

Wenn der Kopf des männlichen Befestigungselements nicht gegen den verformbaren Körper 240 stoßen würde, sondern unmittelbar gegen den steifen Metallrohlschennkörper, so kann die obenbeschriebene Sicherung in der Praxis nicht erreicht werden. Beim Weiterdrehen der Rohrschelle gibt es in diesem Fall eine erhebliche Chance, daß die Segmente 220, 230 zu schwer belastet werden, um so mehr weil zum Drehen der Rohrschelle dann ein Werkzeug verwendet werden wird, wodurch eine übermäßige Kraft ausgeübt werden kann. Das Problem einer Überbelastung gibt es insbesondere auch wenn das weibliche Befestigungselement elastische Lippen umfaßt, die in das Profil des männlichen Befestigungselements eingreifen.

Das weibliche Befestigungselement nach dem zweiten Aspekt der Erfindung umfaßt:
- ein Gehäuse, das eine offene axiale Bohrung begrenzt,
- ein in der axialen Bohrung des Gehäuses angeordnetes Innengewindeorgan, das mehrere bewegbare Segmente hat, die auf das Profil eines männlichen Befestigungselements angreifen, wenn ein männliches Befestigungselement in das weibliche Befestigungselement hineingesteckt wird.

Weitere vorteilhafte Aspekte dieses weiblichen Befestigungselements sind in der vorhergehenden Beschreibung und/oder den Ansprüchen und/oder den nachfolgenden Absätzen beschrieben:
Weibliches Befestigungselement, bei dem das Innengewindeorgan ein ringförmiger Körper ist, der mit elastisch federnden metallenen Lippen versehen ist, die die bewegbaren Segmente des Innengewindeorgans bilden.
Weibliches Befestigungselement, bei dem das weibliche Befestigungselement weiter ein in dem Gehäuse angeordnetes zusätzliches Organ umfaßt, das das männliche Befestigungselement in dem Innengewindeorgan zentriert.
Weibliches Befestigungselement nach einem oder mehreren der vorhergehenden Absätze, bei dem das zusätzliche Organ Beine umfaßt, die sich jeweils zwischen angrenzenden Lippen des Innengewindeorgans erstrecken.
Weibliches Befestigungselement nach einem oder mehreren der vorhergehenden Absätze, bei dem das zusätzliche Organ an der von der Schulter abgewandten Seite des Gewindorgans angeordnet ist.
Weibliches Befestigungselement nach einem oder mehreren der vorhergehenden Absätze, bei dem die Lippen an dem von der Schulter abgewandten Ende des Ringkörpers herausragen.
Weibliches Befestigungselement nach einem oder mehreren der vorhergehenden Absätze, bei dem der Ringkörper aus Metall, vorzugsweise Federstahl, hergestellt ist.
Weibliches Befestigungselement nach einem oder mehreren der vorhergehenden Absätze, bei dem der Ringkörper zwischen den Beinen und dem Gehäuse eingeklemmt ist.
Weibliches Befestigungselement nach einem oder mehreren der vorhergehenden Absätze, bei dem die Bohrung in dem Gehäuse einen nicht kreisförmigen Querschnitt hat, und wobei das zusätzliche Organ einen mit diesem komplementairen nicht-kreisförmigen Querschnitt hat und in solcher Weise in dem Gehäuse paßt, daß das zusätzliche Organ gegen eine Verdrehung relativ zu dem Gehäuse gesichert ist.
Weibliches Befestigungselement nach einem oder mehreren der vorhergehenden Absätze, bei dem das zusätzliche Organ mit einer axialen durchgehenden Bohrung, koaxial zu der Bohrung in dem Gehäuse, versehen ist.
Weibliches Befestigungselement nach einem oder mehreren der vorhergehenden Absätze, bei dem das Gehäuse eine Umfangswand hat und an seinem axialen Ende eine Stirnwand mit einer Öffnung zum Hindurchstecken des männlichen Befestigungselements.

## Patentansprüche

1. Rohrschelle (50;200) umfassend einen aus Metall hergestellten Schellenkörper und ein an dem metallenen Schellenkörper befestigtes weibliches Befestigungselement (1;100;210) für ein mit einem Außengewinde oder einem derartigen Profil versehenes männliches Befestigungselement, das im montierten Zustand die Rohrschelle (5;200) mit einer Wand, Decke oder einer anderen Unterstützung verbindet, wobei das weibliche Befestigungselement (1;100;210) mehrere bewegbare Segmente (32;132;220;230) hat, die auf das Profil eines männlichen Befestigungselements angreifen, wenn ein männliches Befestigungselement in das weibliche Befestigungselement (1;100;210) hineingesteckt wird,
Rohrschelle welche (5;200) weiter mit Sicherungsmitteln zum Sichern des in das weibliche Befestigungselement (1;100;210) hineingesteckten männlichen Befestigungselements versehen ist,
**dadurch gekennzeichnet, daß** die Sicherungsmittel einen verformbaren Sicherungskörper (47; 104; 240) umfassen, der Teil des weiblichen Befestigungselements ist und in solcher Weise aufgestellt ist, daß - wenn die Rohrschelle (50;200) auf das männliche Befestigungselement gedrückt wird - das männliche Befestigungselement in Angriff mit dem verformbaren Sicherungskörper (47;104;240) kommt und anschließend den verformbaren Sicherungskörper (47; 104; 240) verformt und so eine sichernde Wirkung schafft.

2. Rohrschelle nach Anspruch 1, bei der der verformbare Sicherungskörper (47;104,240) in solcher Weise aufgestellt und ausgebildet ist, daß das männliche Befestigungselement erst in Angriff mit dem verformbaren Sicherungskörper (47;104;240) kommt, nachdem das männliche Befestigungselement in Eingriff mit den bewegbaren Segmenten (32;132;220;230) des weiblichen Befestigungselements (1;100;210) gekommen ist.

3. Rohrschelle nach Anspruch 1 oder 2, bei der der verformbare Sicherungskörper in solcher Weise aufgestellt und ausgebildet ist, daß durch eine Drehung der Rohrschelle gegenüber dem männlichen Befestigungselement das Profil des männlichen Befestigungselements in den verformbaren Sicherungskörper (47;104) schneidet.

4. Rohrschelle nach einem oder mehreren der Ansprüche 1-3, bei der der verformbare Sicherungskörper (240) in solcher Weise aufgestellt und ausgebildet ist, daß das männliche Befestigungselement sich mit seiner Stirnfläche an den verformbaren Sicherungskörper (240) anlegt, so daß durch eine Drehung der Rohrschelle (200) gegenüber dem männlichen Befestigungselement dieser verformbare Sicherungskörper (240) verformt wird und so die sichernde Wirkung schafft.

5. Rohrschelle nach einem oder mehreren der Ansprüche 1-4 bei der der verformbare Sicherungskörper (47; 104; 240) in solcher Weise ausgebildet ist, daß die sichernde Wirkung dadurch erhalten wird, daß die Rohrschelle (50;200) zumindestens um eine halbe Umdrehung und maximal um drei Umdrehungen gedreht wird.

6. Rohrschelle nach Anspruch 1, bei der die Sicherungsmittel einen mit einem Innengewinde versehenen starren Teil des weiblichen Befestigungselements umfassen, der in solcher Weise aufgestellt ist, daß das männliche Befestigungselement erst in Engriff mit diesem Innengewinde kommt, nachdem das männliche Befestigungselement in Eingriff mit den bewegbaren Segmenten (132) des weiblichen Befestigungselements (100) gekommen ist.

7. Rohrschelle nach einem oder mehreren der vorhergehenden Ansprüche, bei der der Schellenkörper oder das weibliche Befestigungselement weiter einen starren Anschlag umfaßt, der in solcher Weise aufgestellt und ausgeführt ist, daß das männliche Befestigungselement, das in das weibliche Befestigungselement hineingesteckt ist, sich mit seiner Stirnfläche an diesen Anschlag anlegen kann.

8. Rohrschelle nach einem oder mehreren der vorhergehenden Ansprüche, bei der das weibliche Befestigungselement (1;100;210) umfaßt:
- ein Gehäuse (2;102;211), das eine offene axiale Bohrung begrenzt,
- ein in der axialen Bohrung des Gehäuses angeordnetes,
Innengewindeorgan, (3; 103) das die mehreren bewegbaren (32;132; 220; 230) umfasst, die auf das Profil des männlichen Befestigungselements angreifen, wenn ein männliches Befestigungselement in das weibliche Befestigungselement (1;100;210) hineingesteckt wird.

9. Rohrschelle nach Anspruch 8, bei der das Innengewindeorgan (3;103) ein ringförmiger Körper (31;131) ist, der mit elastisch federnden Lippen (32;132) versehen ist, die die bewegbaren Segmente (32;132) des Innengewindeorgans (3; 103) bilden.

10. Rohrschelle nach Ansprüch 8, bei der der verformbare Sicherungskörper (47; 104) einen verengten Teil in der axialen Bohrung definiert, welcher verengter Teil so ausgebildet ist, daβ er einen geringeren Durchmesser als der Außendurchmesser des aufzunehmenden männlichen Befestigungselements hat, welcher verengte Teil bei dem unter Kraftausübung in den verengten Teil Einführen des männlichen Befestigungselements verformbar ist.

11. Rohrschelle nach Anspruch 10, bei der der verengte Teil in solcher Weise ausgeführt ist, daß durch eine Drehung des männlichen Befestigungselements gegenüber dem weiblichen Befestigungselement (1;100) das Profil des männlichen Befestigungselements in den verengten Teil des Sicherungskörpers (47;104) schneidet.

12. Weibliches Befestigungselement (1;100;210) das dazu ausgelegt ist, auf ein mit einem Außengewinde oder einem derartigen Profil versehenes männliches Befestigungselement gedrückt zu werden, nach einem oder mehreren der vorhergehenden Ansprüche.

## Claims

1. Pipe clamp (50; 200), comprising a clamp body made of metal and a female fastening element (1; 100; 210), fastened to the metal clamp body, for a male fastening element which is provided with an external thread or with a shaped profile of that kind and which, in the mounted state, connects the pipe clamp (5; 200) to a wall, ceiling or other support, the female fastening element (1; 100; 210) having a plurality of movable segments (32; 132; 220; 230) which act on the shaped profile of a male fastening element when a male fastening element is inserted into the female fastening element (1; 100; 210), which pipe clamp (5; 200) is further provided with securing means for securing the male fastening element inserted into the female fastening element (1; 100; 210), **characterised in that** the securing means comprise a deformable securing body (47; 104; 240) which is part of the female fastening element and is positioned in such a manner that, when the pipe clamp (5; 200) is pressed onto the male fastening element, the male fastening element acts on the deformable securing body (47; 104; 240) and subsequently deforms the deformable securing body (47; 104; 240) and thus produces a securing effect.

2. Pipe clamp according to claim 1, wherein the deformable securing body (47; 104; 240) is positioned and constructed in such a manner that the male fastening element does not act on the deformable securing body (47; 104; 240) until the male fastening element has come into engagement with the movable segments (32; 132; 220; 230) of the female fastening element (1; 100; 210).

3. Pipe clamp according to claim 1 or 2, wherein the deformable securing body is positioned and constructed in such a manner that, by rotation of the pipe clamp relative to the male fastening element, the shaped profile of the male fastening element cuts into the deformable securing body (47; 104).

4. Pipe clamp according to one or more of claims 1 to 3, wherein the deformable securing body (240) is positioned and constructed in such a manner that the male fastening element is applied by its end face to the deformable securing body (240), so that, by rotation of the pipe clamp (200) relative to the male fastening element, that deformable securing body (240) is deformed and thus produces the securing effect.

5. Pipe clamp according to one or more of claims 1 to 4, wherein the deformable securing body (47; 104; 240) is constructed in such a manner that the securing effect is obtained by rotation of the pipe clamp (50; 200) by at least half a turn and by not more than three turns.

6. Pipe clamp according to claim 1, wherein the securing means comprise a rigid portion of the female fastening element, which rigid portion is provided with an internal thread and is positioned in such a manner that the male fastening element does not come into engagement with that internal thread until the male fastening element has come into engagement with the movable segments (132) of the female fastening element (100).

7. Pipe clamp according to one or more of the preceding claims, wherein the clamp body or the female fastening element further comprises a rigid stop which is positioned and configured in such a manner that the male fastening element, which is inserted into the female fastening element, can be applied by its end face to that stop.

8. Pipe clamp according to one or more of the preceding claims, wherein the female fastening element (1; 100; 210) comprises:
- a housing (2; 102; 211) which defines an open axial bore,
- an internal thread member (3; 103) which is arranged in the axial bore of the housing and which comprises the plurality of movable segments (32; 132; 220; 230) which act on the shaped profile of the male fastening element when a male fastening element is inserted into the female fastening element (1; 100; 210) .

9. Pipe clamp according to claim 8, wherein the internal thread member (3; 103) is a ring-shaped body (31; 131) provided with resiliently flexible lips (32; 132) which form the movable segments (32; 132) of the internal thread member (3; 103).

10. Pipe clamp according to claim 8, wherein the deformable securing body (47; 104) defines a narrowed portion in the axial bore, which narrowed portion is so constructed that it has a smaller diameter than the external diameter of the male fastening element to be received, which narrowed portion is deformable on insertion of the male fastening element into the narrowed portion under the application of force.

11. Pipe clamp according to claim 10, wherein the narrowed portion is configured in such a manner that, by rotation of the male fastening element relative to the female fastening element (1; 100), the shaped profile of the male fastening element cuts into the narrowed portion of the securing body (47; 104).

12. Female fastening element (1; 100; 210) designed to be pressed onto a male fastening element provided with an external thread or with a shaped profile of that kind, according to one or more of the preceding claims.

## Revendications

1. Collier de serrage (50; 200) comprenant un corps de collier fabriqué en métal et un dispositif de fixation femelle (1; 100; 210) fixé au corps de collier en métal, pour un dispositif de fixation mâle pourvu d'un filet extérieur ou d'un profil de ce type, qui à l'état monté assemble le collier de serrage (5; 200) à un mur, un plafond ou à un autre support, dans lequel le dispositif de fixation femelle (1; 100; 210) comporte plusieurs segments mobiles (32; 132; 220; 230) qui sont en prise sur le profil d'un dispositif de fixation mâle, lorsqu'un dispositif de fixation mâle est introduit dans le dispositif de fixation femelle (1; 100; 210), collier de serrage (5; 200) qui est en outre pourvu de moyens de blocage pour bloquer le dispositif de fixation mâle introduit dans le dispositif de fixation femelle (1; 100; 210), **caractérisé en ce que** les moyens de blocage comprennent un corps de blocage déformable (47; 104; 240), qui constitue une partie du dispositif de fixation femelle et qui est monté de telle façon que - lorsque le collier de serrage (50; 200) est pressé sur le dispositif de fixation mâle - le dispositif de fixation mâle vienne en prise avec le corps de blocage déformable (47; 104; 240) et déforme ensuite le corps de blocage déformable (47; 104; 240), et assure ainsi une action de blocage.

2. Collier de serrage selon la revendication 1, dans lequel le corps de blocage déformable (47; 104; 240) est monté et réalisé de telle façon que le dispositif de fixation mâle ne vienne en prise avec le corps de blocage déformable (47; 104; 240) qu'après que le dispositif de fixation mâle soit venu en prise avec les segments mobiles (32; 132; 220; 230) du dispositif de fixation femelle (1; 100; 210).

3. Collier de serrage selon la revendication 1 ou 2, dans lequel le corps de blocage déformable est monté et réalisé de telle façon que, par une rotation du collier de serrage par rapport au dispositif de fixation mâle, le profil du dispositif de fixation mâle coupe dans le corps de blocage déformable (47; 104).

4. Collier de serrage selon une ou plusieurs des revendications 1 - 3, dans lequel le corps de blocage déformable (240) est monté et réalisé de telle façon que le dispositif de fixation mâle s'applique par sa face frontale sur le corps de blocage déformable (240), de telle manière que, par une rotation du collier de serrage (200) par rapport au dispositif de fixation mâle, ce corps de blocage déformable (240) soit déformé et assure ainsi l'action de blocage.

5. Collier de serrage selon une ou plusieurs des revendications 1 - 4, dans lequel le corps de blocage déformable (47; 104; 240) est réalisé de telle façon que l'action de blocage puisse être obtenue par le fait que le collier de serrage (50; 200) est tourné d'au moins un demi-tour et au maximum de trois tours.

6. Collier de serrage selon la revendication 1, dans lequel les moyens de blocage comprennent une partie rigide du dispositif de fixation femelle, pourvue d'un filet intérieur, qui est montée de telle façon que le dispositif de fixation mâle ne vienne en prise avec ce filet intérieur qu'après que le dispositif de fixation mâle soit venu en prise avec les segments mobiles (132) du dispositif de fixation femelle (100).

7. Collier de serrage selon une ou plusieurs des revendications précédentes, dans lequel le corps de collier ou le dispositif de fixation femelle comprend en outre une butée rigide, qui est montée et réalisée de telle façon que le dispositif de fixation mâle, qui est introduit dans le dispositif de fixation femelle, puisse reposer par sa face frontale sur cette butée.

8. Collier de serrage selon une ou plusieurs des revendications précédentes, dans lequel le dispositif de fixation femelle (1; 100; 210) comprend :
- un corps (2; 102; 211), qui délimite un alésage axial ouvert;
- un organe formant filet intérieur (3; 103) disposé dans l'alésage axial du corps, qui comprend plusieurs segments mobiles (32; 132; 220; 230) qui s'appliquent sur le profil du dispositif de fixation mâle lorsqu'un dispositif de fixation mâle est introduit dans le dispositif de fixation femelle (1; 100; 210).

9. Collier de serrage selon la revendication 8, dans lequel l'organe formant filet intérieur (3; 103) est un corps annulaire (31; 131), qui est pourvu de lèvres déformables élastiquement (32; 132) qui forment les segments mobiles (32; 132) de l'organe formant filet intérieur (3; 103).

10. Collier de serrage selon la revendication 8, dans lequel le corps de blocage déformable (47; 104) définit une partie rétrécie dans l'alésage axial, partie rétrécie qui est réalisée de telle façon qu'elle présente un diamètre plus petit que le diamètre extérieur du dispositif de fixation mâle à recevoir, partie rétrécie qui est déformable lors de l'introduction du dispositif de fixation mâle par force dans la partie rétrécie.

11. Collier de serrage selon la revendication 10, dans lequel la partie rétrécie est réalisée de telle façon que, par une rotation du dispositif de fixation mâle par rapport au dispositif de fixation femelle (1; 100), le profil du dispositif de fixation mâle coupe dans la partie rétrécie du corps de blocage (47; 104).

12. Dispositif de fixation femelle (1; 100; 210) qui est conçu pour être pressé sur un dispositif de fixation mâle pourvu d'un filet extérieur ou d'un profil de ce type, selon une ou plusieurs des revendications précédentes.
